# EUROPEAN PATENT APPLICATION

(11) **EP 3 162 872 A1**
(43) Date of publication of application: **03.05.2017**
(21) Application number: 16176237.2
(22) Date of filing: 24.06.2016
(51) Int. Cl.: C09K 8/035, C09K 8/584

(54) **INTERNAL OLEFIN SULFONATE COMPOSITION AND USE THEREOF IN ENHANCED OIL RECOVERY**

(71) Applicant: Shell Internationale Research Maatschappij B.V., 2596 HR Den Haag (NL)
(72) Inventor: BARNES, Julian Richard, 1031HW Amsterdam (NL); CROM, Lori Ann, Houston, Texas 77082 (US); KING, Timothy Elton, Houston, Texas 77082 (US); KUNKELER, Paulus Johannes, 3012CM Rotterdam (NL); WADMAN, Sipke Hidde, 1031HW Amsterdam (NL)
(74) Representative: Matthezing, Robert Maarten

(57) **Abstract**

The invention relates to an internal olefin sulfonate composition, which comprises an internal olefin sulfonate and an additive, wherein the weight ratio of the additive to the internal olefin sulfonate is below 1:1, and wherein the additive is a compound of the formula R-O-[PO]ₓ[EO]_{y}-X wherein R is a branched hydrocarbyl group which has a branching index equal to or greater than 0.3 and which has a weight average carbon number of from 5 to 32, PO is a propylene oxide group, EO is an ethylene oxide group, x is the number of propylene oxide groups and is of from 0 to 40, y is the number of ethylene oxide groups and is of from 0 to 50, and the sum of x and y is of from 5 to 60; and wherein X is selected from the group consisting of: (i) a hydrogen atom; (ii) a group comprising a carboxylate moiety; (iii) a group comprising a sulfate moiety; and (iv) a group comprising a sulfonate moiety. Further, the invention relates to a method of treating a hydrocarbon containing formation wherein said internal olefin sulfonate composition is used.

## Description

### Field of the invention

The present invention relates to an internal olefin sulfonate composition and to a method of treating a hydrocarbon containing formation using said internal olefin sulfonate composition.

### Background of the invention

Hydrocarbons, such as oil, may be recovered from hydrocarbon containing formations (or reservoirs) by penetrating the formation with one or more wells, which may allow the hydrocarbons to flow to the surface. A hydrocarbon containing formation may have one or more natural components that may aid in mobilising hydrocarbons to the surface of the wells. For example, gas may be present in the formation at sufficient levels to exert pressure on the hydrocarbons to mobilise them to the surface of the production wells. These are examples of so-called "primary oil recovery".

However, reservoir conditions (for example permeability, hydrocarbon concentration, porosity, temperature, pressure, composition of the rock, concentration of divalent cations (or hardness), etc.) can significantly impact the economic viability of hydrocarbon production from any particular hydrocarbon containing formation. Furthermore, the above-mentioned natural pressure-providing components may become depleted over time, often long before the majority of hydrocarbons have been extracted from the reservoir. Therefore, supplemental recovery processes may be required and used to continue the recovery of hydrocarbons, such as oil, from the hydrocarbon containing formation. Such supplemental oil recovery is often called "secondary oil recovery" or "tertiary oil recovery". Examples of known supplemental processes include waterflooding, polymer flooding, gas flooding, alkali flooding, thermal processes, solution flooding, solvent flooding, or combinations thereof.

In recent years there has been increased activity in developing new methods of chemical Enhanced Oil Recovery (cEOR) for maximising the yield of hydrocarbons from a subterranean reservoir. In surfactant cEOR, the mobilisation of residual oil is achieved through surfactants which generate a sufficiently low crude oil / water interfacial tension (IFT) to give a capillary number large enough to overcome capillary forces and allow the oil to flow (Lake, Larry W., "Enhanced oil recovery", PRENTICE HALL, Upper Saddle River, New Jersey, 1989, ISBN 0-13-281601-6).

However, different reservoirs can have different characteristics (for example composition of the rock, crude oil type, temperature, water composition, salinity, concentration of divalent cations (or hardness), etc.), and therefore, it is desirable that the structures and properties of the added surfactant(s) be matched to the particular conditions of a reservoir to achieve the required low IFT. In addition, other important criteria may have to be fulfilled, such as low rock retention or adsorption, compatibility with polymer, thermal and hydrolytic stability and acceptable cost (including ease of commercial scale manufacture).

Compositions and methods for cEOR utilising an internal olefin sulfonate (IOS) as surfactant are described in US4597879, US4979564, US5068043 and "Field Test of Cosurfactant-enhanced Alkaline Flooding", Falls et al., Society of Petroleum Engineers Reservoir Engineering, 1994.

In the present invention, it is desired to provide compositions and methods for cEOR utilising internal olefin sulfonates as surfactant. Normally, surfactants for enhanced hydrocarbon recovery are transported to a hydrocarbon recovery location and stored at that location in the form of an aqueous composition. At the hydrocarbon recovery location, such composition would then be diluted, before it is injected into a hydrocarbon containing formation. It may be desired in a case where such surfactant containing aqueous composition is produced at a location remote from the hydrocarbon recovery location, to make such surfactant containing composition as concentrated as possible (for example more than 60 wt.% of active matter) as this would take less volume resulting in more efficiency during transport. However, highly concentrated surfactant containing aqueous compositions have the tendency to be viscous which is disadvantageous in that it results in a complicated handling of the concentrated compositions, when transporting, storing, pumping and/or mixing (when diluting) these.

A solution to the problem of handling such concentrated internal olefin sulfonate (IOS) compositions is to use the concentrate as is, without a viscosity modifier (no rheology modifier). In this case there are two approaches: a) either the concentrate needs to be handled hot, typically at more than 80°C, to keep the viscosity acceptably low and allow the product to drain under gravity and/or enable the use of lower shear pumps; b) or the highly viscous concentrate needs to be handled with the appropriate equipment, e.g. with special, high shear pumps and mixers as increasing shear reduces viscosity. For said hot concentrate case a) the concentrate would need to be loaded hot as a liquid at the manufacturing location into large (e.g. 20 mt) ISO container tanks and, at the hydrocarbon recovery location, the ISO container would need to be steam heated to re-liquify the product and facilitate its off-loading. However, this solution is disadvantageous in that i) heating and heat tracing of equipment is required at loading and off-loading and there will be significant time spent in steam heating the ISO container contents, ii) the viscosity may still be too high, and iii) special high shear pumps may still be required. Further, such heating may also result in degradation of the IOS product due to hot spots on the internal surfaces of the ISO container during the steam heating process.

Another solution is to add a viscosity (rheology) modifier to such concentrated IOS compositions. Generally, viscosity modifiers are co-solvent type compounds having a relatively low carbon number. In "Research Disclosure", in an article entitled "Combinations Of Internal Olefin Sulfonates With Lower Alcohols Or Non-ionic Surfactants" (published in 2013; Research Disclosure database number 595085), it is disclosed that a lower alcohol may be used in combination with an internal olefin sulfonate (IOS), wherein such lower alcohol may be a linear or branched C₁ to C₆ monoalkylether of mono- or di-ethylene glycol. Examples of the latter are diethylene glycol monobutyl ether (DGBE), ethylene glycol monobutyl ether (EGBE) and triethylene glycol monobutyl ether (TGBE). Further, it is disclosed that a linear or branched C₁ to C₆ dialkylether of mono-, di- or triethylene glycol may be used in combination with an IOS, such as ethylene glycol dibutyl ether (EGDE).

When mixed in sufficient quantity with the IOS concentrate, such small (low carbon number) modifiers may lower the viscosity to a certain extent. However, this other solution is also disadvantageous in that these small modifiers may have a relatively high volatility and/or flammability which would make their inclusion more complicated, requiring for example the use of a nitrogen blanket, and is therefore costly.

Still further, in said "Research Disclosure" article, it is disclosed that C₇ to C₁₈-alcohols that are alkoxylated with ethylene oxide and/or propylene oxide with a minimum degree of alkoxylation of 2 (non-ionic surfactants) may be used in combination with an IOS. WO2011100301 discloses a hydrocarbon recovery composition which comprises a high molecular weight internal olefin sulfonate and a viscosity reducing compound, which latter compound may for example be a C₂-C₁₂ ethoxylated alcohol. Example 2 of WO2011100301 shows that by adding 10% of NEODOL^{TM} 91-8 alcohol ethoxylate to C₁₉-₂₃ internal olefin sulfonate, the IOS viscosity is reduced from 4900 to 4400 cP. Said NEODOL™ 91-8 alcohol ethoxylate is a mixture of ethoxylates of C₉, C₁₀ and C₁₁ alcohols wherein the average value for the number of the ethylene oxide groups is 8.

In the present invention it is desired to reduce the viscosity of IOS containing compositions, especially concentrated IOS compositions, thereby improving their rheological behaviour, in a way which does not have all of the above-mentioned disadvantages.

Further cEOR sub-surface performance parameters other than the above-mentioned interfacial tension (IFT), are optimal salinity and aqueous solubility at such optimal salinity. By "optimal salinity", reference is made to the salinity of the brine present in a mixture comprising said brine (a salt-containing aqueous solution), the hydrocarbons (e.g. oil) and the surfactant(s), at which salinity said IFT is lowest. A good microemulsion phase behavior for the surfactant may be desired since this is indicative for such low IFT. In addition, it may be desired that at or close to such optimal salinity, the aqueous solubility of the full surfactant formulation (that is to say, surfactant, any polymer and any alkali as dissolved in a brine composition for injection) is sufficiently good.

Thus, in the present invention, it is further desired to provide an internal olefin sulfonate composition having a sufficiently low viscosity, whilst at the same time having a sufficiently good cEOR sub-surface performance as indicated by one or more of the above parameters.

### Summary of the invention

It was found that the viscosity of an internal olefin sulfonate (IOS) composition may be reduced by adding an additive which is a compound of the formula (I)

Formula (I) R-O- [PO]ₓ [EO] _{y}-X

wherein R is a branched hydrocarbyl group which has a branching index equal to or greater than 0.3 and which has a weight average carbon number of from 5 to 32, PO is a propylene oxide group, EO is an ethylene oxide group, x is the number of propylene oxide groups and is of from 0 to 40, y is the number of ethylene oxide groups and is of from 0 to 50, and the sum of x and y is of from 5 to 60;
and wherein X is selected from the group consisting of:
(i) a hydrogen atom; (ii) a group comprising a carboxylate moiety; (iii) a group comprising a sulfate moiety; and (iv) a group comprising a sulfonate moiety.

Accordingly, the present invention relates to an internal olefin sulfonate composition, which comprises an internal olefin sulfonate and an additive, wherein the weight ratio of the additive to the internal olefin sulfonate is below 1:1, and wherein the additive is a compound of the formula (I) as described above.

Further, the present invention relates to a method of treating a hydrocarbon containing formation, comprising the following steps:
a) providing the composition which comprises an internal olefin sulfonate and an additive as described above to at least a portion of the hydrocarbon containing formation; and
b) allowing the surfactants from the composition to interact with the hydrocarbons in the hydrocarbon containing formation.

### Brief description of the drawings

Figure 1 illustrates the reactions of an internal olefin with sulfur trioxide (sulfonating agent) during a sulfonation process.
Figure 2 illustrates the subsequent neutralization and hydrolysis process to form an internal olefin sulfonate.
Figure 3 relates to an embodiment for application in cEOR.
Figure 4 relates to another embodiment for application in cEOR.

### Detailed description of the invention

In one aspect, the present invention relates to an internal olefin sulfonate composition which comprises an internal olefin sulfonate and the above-described additive, wherein the weight ratio of the additive to the internal olefin sulfonate is below 1:1. Preferably, the weight ratio of the additive to the internal olefin sulfonate is at least 1:100, more preferably at least 1:50, more preferably at least 1:20 and most preferably at least 1:10. Further, preferably, the weight ratio of the additive to the internal olefin sulfonate is at most 1:5.7, more preferably at most 1:4.0, more preferably at most 1:2.3, more preferably at most 1:1.5. In a case where the internal olefin sulfonate composition contains a surfactant other than an internal olefin sulfonate and other than the above-described additive, the weight of such other surfactant should be added to the weight of internal olefin sulfonate when calculating said weight ratio.

In the present invention, before the above-described additive is combined with an internal olefin sulfonate composition the viscosity of which may need to be reduced, such composition preferably contains water and internal olefin sulfonate in such amounts that the relative amounts of water and internal olefin sulfonate, and any other anionic surfactant, are such that the active matter content of such aqueous internal olefin sulfonate composition is preferably at least 40 wt.%, more preferably at least 50 wt.%, most preferably at least 60 wt.%. "Active matter" herein means the total of anionic species in said aqueous composition, but excluding any inorganic anionic species like for example sodium sulfate.

As also described above, it has been found that the viscosity of IOS compositions can be reduced by adding the above-described additive in a weight ratio of below 1:1. However, not only viscosity is of relevance. It may also be desired to provide such IOS compositions which may have an improved cEOR performance at a relatively high temperature and at a relatively high concentration of divalent cations, such as Ca²⁺ and Mg²⁺ cations. In practice, the temperature in a hydrocarbon containing formation may be as high as 60 °C or even higher. Further, said divalent cations may be present in water or brine originating from the hydrocarbon containing formation and/or generally in water or brine (from whatever source) which is used to inject the surfactant into the hydrocarbon containing formation. For example, sea water may contain 1,700 parts per million by weight (ppmw) of divalent cations and may have a salinity of 3.6 wt.%.

In general, surfactant stability at a high temperature is relevant in order to prevent a surfactant from being decomposed (for example hydrolyzed) at such high temperature. Internal olefin sulfonates (IOS) are known to be heat stable at a temperature of 60°C or higher. However, in addition to being heat stable, a surfactant composition may also have to withstand a relatively high concentration of divalent cations, as mentioned above, for example 100 ppmw or more. For such a high concentration of divalent cations may have the effect of precipitating the surfactant out of solution. In general, and in particular at such a high concentration of divalent cations, the surfactant should have an adequate aqueous solubility since the latter improves the injectability of the fluid comprising the surfactant composition to be injected into the hydrocarbon containing formation. Further, an adequate aqueous solubility reduces loss of surfactant through adsorption to rock within the hydrocarbon containing formation. Precipitated solutions would not be suitable as they would result in loss of surfactant during a flood and could also result in reservoir plugging.

One solution to such problem is water softening, that is to say removing the divalent cations from the water or brine that may originate from the hydrocarbon containing formation. However, this would require using energy intensive processes such as reversed osmosis.

Thus, it may also be desirable to provide compositions comprising an internal olefin sulfonate which may have a suitable cEOR performance, for example in terms of reducing the interfacial tension (IFT), under the above-described conditions of high temperature and high divalent cation concentration whilst at the same time having an adequately high aqueous solubility and low viscosity.

It has been found that apart from viscosity reduction, the aqueous solubility of IOS compositions may be improved by adding the above-described additive in a weight ratio of below 1:1, for example when diluting a concentrated IOS containing aqueous composition before injection into a hydrocarbon containing formation.

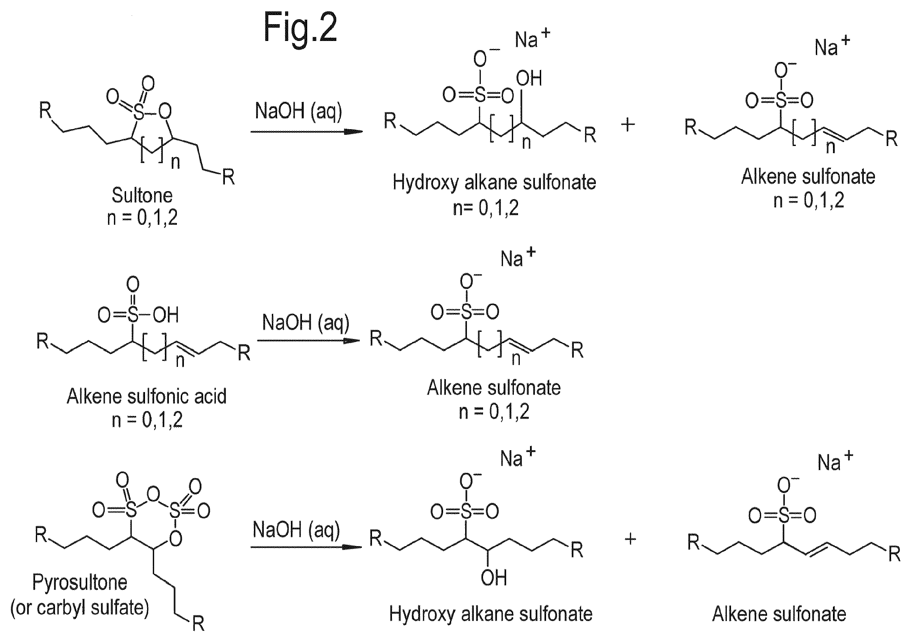

The composition of the present invention is an internal olefin sulfonate composition which comprises internal olefin sulfonate molecules. An internal olefin sulfonate molecule is an alkene or hydroxyalkane which contains one or more sulfonate groups. Examples of such internal olefin sulfonate molecules are shown in Figure 2, which shows hydroxy alkane sulfonates (HAS) and alkene sulfonates (OS).

Thus, the composition of the present invention comprises an internal olefin sulfonate. Said internal olefin sulfonate (IOS) is prepared from an internal olefin by sulfonation. Within the present specification, an internal olefin and an IOS comprise a mixture of internal olefin molecules and a mixture of IOS molecules, respectively. That is to say, within the present specification, "internal olefin" as such refers to a mixture of internal olefin molecules whereas "internal olefin molecule" refers to one of the components from such internal olefin. Analogously, within the present specification, "IOS" or "internal olefin sulfonate" as such refers to a mixture of IOS molecules whereas "IOS molecule" or "internal olefin sulfonate molecule" refers to one of the components from such IOS. Said molecules differ from each other for example in terms of carbon number and/or branching degree.

Branched IOS molecules are IOS molecules derived from internal olefin molecules which comprise one or more branches. Linear IOS molecules are IOS molecules derived from internal olefin molecules which are linear, that is to say which comprise no branches (unbranched internal olefin molecules). An internal olefin may be a mixture of linear internal olefin molecules and branched internal olefin molecules. Analogously, an IOS may be a mixture of linear IOS molecules and branched IOS molecules.

An internal olefin or IOS may be characterised by its carbon number and/or linearity.

In case reference is made to an average carbon number, this means that the internal olefin or IOS in question is a mixture of molecules which differ from each other in terms of carbon number. Within the present specification, said average carbon number is determined by multiplying the number of carbon atoms of each molecule by the weight fraction of that molecule and then adding the products, resulting in a weight average carbon number. The average carbon number may be determined by gas chromatography (GC) analysis of the internal olefin.

Within the present specification, linearity is determined by dividing the weight of linear molecules by the total weight of branched, linear and cyclic molecules. Substituents (like the sulfonate group and optional hydroxy group in the internal olefin sulfonates) on the carbon chain are not seen as branches. The linearity may be determined by gas chromatography (GC) analysis of the internal olefin.

Within the present specification, "branching index" (BI) refers to the average number of branches per molecule, which may be determined by dividing the total number of branches by the total number of molecules. Said branching index may be determined by ¹H-NMR analysis.

When the branching index is determined by ¹H-NMR analysis, said total number of branches equals: [total number of branches on olefinic carbon atoms (olefinic branches)] + [total number of branches on aliphatic carbon atoms (aliphatic branches)]. Said total number of aliphatic branches equals the number of methine groups, which latter groups are of formula R₃CH wherein R is an alkyl group. Further, said total number of olefinic branches equals: [number of trisubstituted double bonds] + [number of vinylidene double bonds] + 2*[number of tetrasubstituted double bonds]. Formulas for said trisubstituted double bond, vinylidene double bond and tetrasubstituted double bond are shown below. In all of the below formulas, R is an alkyl group.

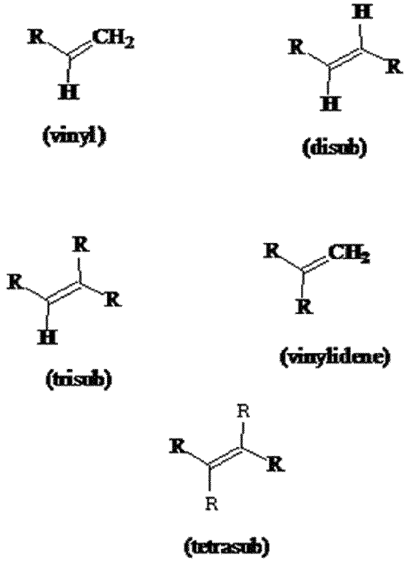

Within the present specification, said average molecular weight is determined by multiplying the molecular weight of each surfactant molecule by the weight fraction of that molecule and then adding the products, resulting in a weight average molecular weight.

The foregoing passages regarding (average) carbon number, linearity, branching index and molecular weight apply analogously to the additive as further described below.

In the present invention, the internal olefin sulfonate composition comprises an internal olefin sulfonate (IOS). Preferably at least 60 wt.%, more preferably at least 70 wt.%, more preferably at least 80 wt.%, most preferably at least 90 wt.% of said IOS is linear. For example, 60 to 100 wt.%, more suitably 70 to 99 wt.%, most suitably 80 to 99 wt.% of said IOS may be linear. Branches in said IOS may include methyl, ethyl and/or higher molecular weight branches including propyl branches.

Further, preferably, said IOS is not substituted by groups other than sulfonate groups and optionally hydroxy groups. Further, preferably, said IOS has an average carbon number in the range of from 5 to 30, more preferably 10 to 30, more preferably 15 to 30, most preferably 17 to 28.

Still further, preferably, said IOS may have a carbon number distribution within broad ranges. For example, in the present invention, said IOS may be selected from the group consisting of C₁₅₋₁₈ IOS, C₁₉₋₂₃ IOS, C₂₀₋₂₄ IOS, C₂₄₋₂₈ IOS and mixtures thereof, wherein "IOS" stands for "internal olefin sulfonate". That is to say, said IOS may be C₁₅₋₁₈ IOS or C₁₉₋₂₃ IOS or C₂₀₋₂₄ IOS or C₂₄₋₂₈ IOS or any mixture thereof. IOS suitable for use in the present invention include those from the ENORDET™ O series of surfactants commercially available from Shell Chemicals Company.

"C₁₅₋₁₈ internal olefin sulfonate" (C₁₅₋₁₈ IOS) as used herein means a mixture of internal olefin sulfonate molecules wherein the mixture has an average carbon number of from 16 to 17 and at least 50% by weight, preferably at least 65% by weight, more preferably at least 75% by weight, most preferably at least 90% by weight, of the internal olefin sulfonate molecules in the mixture contain from 15 to 18 carbon atoms.

"C₁₉₋₂₃ internal olefin sulfonate" (C₁₉₋₂₃ IOS) as used herein means a mixture of internal olefin sulfonate molecules wherein the mixture has an average carbon number of from 21 to 23 and at least 50% by weight, preferably at least 60% by weight, of the internal olefin sulfonate molecules in the mixture contain from 19 to 23 carbon atoms.

"C₂₀₋₂₄ internal olefin sulfonate" (C₂₀₋₂₄ IOS) as used herein means a mixture of internal olefin sulfonate molecules wherein the mixture has an average carbon number of from 20 to 23 and at least 50% by weight, preferably at least 65% by weight, more preferably at least 75% by weight, most preferably at least 90% by weight, of the internal olefin sulfonate molecules in the mixture contain from 20 to 24 carbon atoms.

"C₂₄₋₂₈ internal olefin sulfonate" (C₂₄₋₂₈ IOS) as used herein means a mixture of internal olefin sulfonate molecules wherein the mixture has an average carbon number of from 24.5 to 27 and at least 40% by weight, preferably at least 45% by weight, of the internal olefin sulfonate molecules in the mixture contain from 24 to 28 carbon atoms.

Further, for the internal olefin sulfonates which are substituted by sulfonate groups, the cation may be any cation, such as an ammonium, alkali metal or alkaline earth metal cation, preferably an ammonium or alkali metal cation.

An IOS molecule is made from an internal olefin molecule whose double bond is located anywhere along the carbon chain except at a terminal carbon atom. Internal olefin molecules may be made by double bond isomerization of alpha olefin molecules whose double bond is located at a terminal position. Generally, such isomerization results in a mixture of internal olefin molecules whose double bonds are located at different internal positions. The distribution of the double bond positions is mostly thermodynamically determined. Further, that mixture may also comprise a minor amount of non-isomerized alpha olefins. Still further, because the starting alpha olefin may comprise a minor amount of paraffins (non-olefinic alkanes), the mixture resulting from alpha olefin isomeration may likewise comprise that minor amount of unreacted paraffins.

In the present invention, the amount of alpha olefins in the internal olefin may be up to 5%, for example 1 to 4 wt.% based on total composition. Further, in the present invention, the amount of paraffins in the internal olefin may be up to 2 wt.%, for example up to 1 wt.% based on total composition.

Suitable processes for making an internal olefin include those described in US5510306, US5633422, US5648584, US5648585, US5849960, EP0830315B1 and "Anionic Surfactants: Organic Chemistry", Surfactant Science Series, volume 56, Chapter 7, Marcel Dekker, Inc., New York, 1996, ed. H.W. Stacke.

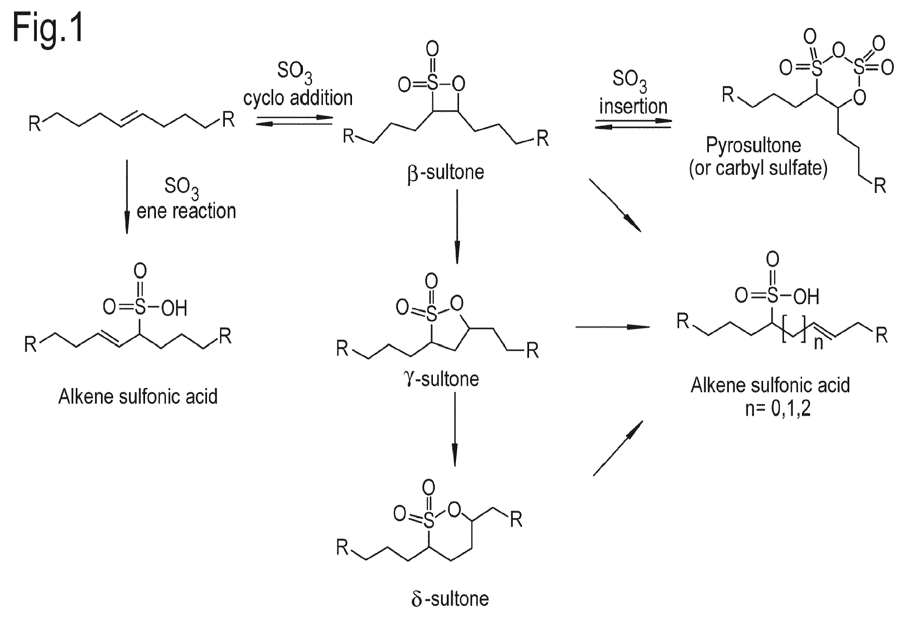

In the sulfonation step, the internal olefin is contacted with a sulfonating agent. Referring to Figure 1, reaction of the sulfonating agent with an internal olefin leads to the formation of cyclic intermediates known as beta-sultones, which can undergo isomerization to unsaturated sulfonic acids and the more stable gamma- and delta-sultones.

In a next step, sulfonated internal olefin from the sulfonation step is contacted with a base containing solution. Referring to Figure 2, in this step, beta-sultones are converted into beta-hydroxyalkane sulfonates, whereas gamma- and delta-sultones are converted into gamma-hydroxyalkane sulfonates and delta-hydroxyalkane sulfonates, respectively. Part of said hydroxyalkane sulfonates may be dehydrated into alkene sulfonates.

Thus, referring to Figures 1 and 2, an IOS comprises a range of different molecules, which may differ from one another in terms of carbon number, being branched or unbranched, number of branches, molecular weight and number and distribution of functional groups such as sulfonate and hydroxyl groups. An IOS comprises both hydroxyalkane sulfonate molecules and alkene sulfonate molecules and possibly also di-sulfonate molecules. Hydroxyalkane sulfonate molecules and alkene sulfonate molecules are shown in Figure 2. Di-sulfonate molecules (not shown in Figure 2) originate from a further sulfonation of for example an alkene sulfonic acid as shown in Figure 1.

The IOS may comprise at least 30% hydroxyalkane sulfonate molecules, up to 70% alkene sulfonate molecules and up to 15% di-sulfonate molecules. Suitably, the IOS comprises from 40% to 95% hydroxyalkane sulfonate molecules, from 5% to 50% alkene sulfonate molecules and from 0% to 10% di-sulfonate molecules. Beneficially, the IOS comprises from 50% to 90% hydroxyalkane sulfonate molecules, from 10% to 40% alkene sulfonate molecules and from less than 1% to 5% di-sulfonate molecules. More beneficially, the IOS comprises from 70% to 90% hydroxyalkane sulfonate molecules, from 10% to 30% alkene sulfonate molecules and less than 1% di-sulfonate molecules. The composition of the IOS may be measured using a liquid chromatography / mass spectrometry (LC-MS) technique.

US4183867, US4248793 and EP0351928A1 disclose processes which can be used to make internal olefin sulfonates. Further, the internal olefin sulfonates may be synthesized in a way as described by Van Os et al. in "Anionic Surfactants: Organic Chemistry", Surfactant Science Series 56, ed. Stacke H.W., 1996, Chapter 7: Olefin sulfonates, pages 367-371.

The internal olefin sulfonate composition of the present invention additionally comprises an additive which is a compound of the formula (I)

Formula (I) R-O-[PO]ₓ[EO]_{y}-X

wherein R is a branched hydrocarbyl group which has a branching index equal to or greater than 0.3 and which has a weight average carbon number of from 5 to 32, PO is a propylene oxide group, EO is an ethylene oxide group, x is the number of propylene oxide groups and is of from 0 to 40, y is the number of ethylene oxide groups and is of from 0 to 50, and the sum of x and y is of from 5 to 60;
and wherein X is selected from the group consisting of:
(i) a hydrogen atom; (ii) a group comprising a carboxylate moiety; (iii) a group comprising a sulfate moiety; and (iv) a group comprising a sulfonate moiety.

The hydrocarbyl group R in said formula (I) is preferably aliphatic. When said hydrocarbyl group R is aliphatic, it may be an alkyl group, cycloalkyl group or alkenyl group, suitably an alkyl group. Preferably, said hydrocarbyl group is an alkyl group. Said hydrocarbyl group may be substituted by another hydrocarbyl group as described hereinbefore or by a substituent which contains one or more heteroatoms, such as a hydroxy group or an alkoxy group.

The non-alkoxylated alcohol R-OH, from which the hydrocarbyl group R in the above formula (I) originates, may be an alcohol containing 1 hydroxyl group (mono-alcohol) or an alcohol containing of from 2 to 6 hydroxyl groups (polyalcohol). Suitable examples of poly-alcohols are diethylene glycol, dipropylene glycol, glycerol, pentaerythritol, trimethylolpropane, sorbitol and mannitol. Preferably, in the present invention, the hydrocarbyl group R in the above formula (I) originates from a non-alkoxylated alcohol R-OH which only contains 1 hydroxyl group (mono-alcohol). Further, said alcohol may be a primary or secondary alcohol, preferably a primary alcohol.

The non-alkoxylated alcohol R-OH, wherein R is an aliphatic group and from which the hydrocarbyl group R in the above formula (I) originates, may comprise a range of different molecules which may differ from one another in terms of carbon number for the aliphatic group R, the aliphatic group R being branched or unbranched, number of branches for the aliphatic group R, and molecular weight.

Preferably, the hydrocarbyl group R in the above formula (I) is an alkyl group. Said alkyl group has a weight average carbon number within a wide range, namely 5 to 32, more suitably 6 to 25, more suitably 7 to 22, more suitably 8 to 20, most suitably 9 to 17. In a case where said alkyl group contains 3 or more carbon atoms, the alkyl group is attached either via its terminal carbon atom or an internal carbon atom to the oxygen atom, preferably via its terminal carbon atom. Further, the weight average carbon number of said alkyl group is at least 5, preferably at least 6, more preferably at least 7, more preferably at least 8, more preferably at least 9, more preferably at least 10, more preferably at least 11, most preferably at least 12. Still further, the weight average carbon number of said alkyl group is at most 32, preferably at most 25, more preferably at most 20, more preferably at most 17, more preferably at most 16, more preferably at most 15, more preferably at most 14, most preferably at most 13.

Further, in the present invention, said alkyl group R in the above formula (I) is a branched alkyl group which has a branching index equal to or greater than 0.3. By said "branching index", the "average number of branches" as defined above is referred to. In the present invention, the branching index of said alkyl group R in the above formula (I) is preferably of from 0.3 to 3.0, most preferably 1.2 to 1.4. Further, said branching index is at least 0.3, preferably at least 0.5, more preferably at least 0.7, more preferably at least 0.9, more preferably at least 1.0, more preferably at least 1.1, most preferably at least 1.2. Still further, said branching index is preferably at most 3.0, more preferably at most 2.5, more preferably at most 2.2, more preferably at most 2.0, more preferably at most 1.8, more preferably at most 1.6, most preferably at most 1.4.

The alkylene oxide groups in the above formula (I) comprise ethylene oxide (EO) groups or propylene oxide (PO) groups or a mixture of ethylene oxide and propylene oxide groups. In addition, other alkylene oxide groups may be present, such as butylene oxide groups. Preferably, said alkylene oxide groups consist of ethylene oxide groups or propylene oxide groups or a mixture of ethylene oxide and propylene oxide groups. In case of a mixture of different alkylene oxide groups, the mixture may be random or blockwise, preferably blockwise. In the case of a blockwise mixture of ethylene oxide and propylene oxide groups, the mixture preferably contains one EO block and one PO block, wherein the PO block is attached via an oxygen atom to the hydrocarbyl group R.

In the above formula (I), x is the number of propylene oxide groups and is of from 0 to 40. In the present invention, the average value for x is of from 0 to 40, and may be of from 1 to 40, suitably of from 3 to 35, more suitably of from 5 to 30, more suitably of from 7 to 25, more suitably of from 9 to 20, most suitably of from 10 to 15.

Further, in the above formula (I), y is the number of ethylene oxide groups and is of from 0 to 50. In the present invention, the average value for y is of from 0 to 50, and may be of from 1 to 50, suitably of from 5 to 40, more suitably of from 9 to 35, more suitably of from 12 to 30, more suitably of from 15 to 25, most suitably of from 17 to 23.

In the above formula (I), the sum of x and y is the number of propylene oxide and ethylene oxide groups and is of from 5 to 60. In the present invention, the average value for the sum of x and y is of from 5 to 60, and may be of from 15 to 50, suitably of from 20 to 45, more suitably of from 24 to 40, more suitably of from 28 to 37, most suitably of from 30 to 35.

In the present invention, y may be 0, in which case the alkylene oxide groups in the above formula (I) comprise PO groups but no EO groups.

In the present invention, x may be 0, in which case the alkylene oxide groups in the above formula (I) comprise EO groups but no PO groups.

Further, in the present invention, each of x and y may be at least 1, in which case the alkylene oxide groups in the above formula (I) comprise PO and EO groups.

In a case where, in the present invention, X in the above formula (I) is not a hydrogen atom, y is preferably 0, in which case the alkylene oxide groups in the above formula (I) comprise PO groups but no EO groups.

In a case where, in the present invention, X in the above formula (I) is a hydrogen atom, each of x and y is preferably at least 1, in which case the alkylene oxide groups in the above formula (I) comprise PO and EO groups.

In the present invention, the additive of the above formula (I) may be a liquid, a waxy liquid or a solid at 20 °C. In particular, it is preferred that at least 50 wt.%, suitably at least 60 wt.%, more suitably at least 70 wt.% of the additive is liquid at 20°C. Further, in particular, it is preferred that of from 50 to 100 wt.%, suitably of from 60 to 100 wt.%, more suitably of from 70 to 100 wt.% of the additive is liquid at 20°C.

The non-alkoxylated alcohol R-OH, from which the hydrocarbyl group R in the above formula (I) originates, may be prepared in any way. For example, a primary aliphatic alcohol may be prepared by hydroformylation of a branched olefin. Preparations of branched olefins are described in US5510306, US5648584 and US5648585. Preparations of branched long chain aliphatic alcohols are described in US5849960, US6150222, US6222077.

The above-mentioned (non-alkoxylated) alcohol R-OH, from which the hydrocarbyl group R in the above formula (I) originates, may be alkoxylated by reacting with alkylene oxide in the presence of an appropriate alkoxylation catalyst. The alkoxylation catalyst may be potassium hydroxide or sodium hydroxide which is commonly used commercially. Alternatively, a double metal cyanide catalyst may be used, as described in US6977236. Still further, a lanthanum-based or a rare earth metal-based alkoxylation catalyst may be used, as described in US5059719 and US5057627. The alkoxylation reaction temperature may range from 90°C to 250°C, suitably 120 to 220°C, and super atmospheric pressures may be used if it is desired to maintain the alcohol substantially in the liquid state.

Preferably, the alkoxylation catalyst is a basic catalyst, such as a metal hydroxide, which catalyst contains a Group IA or Group IIA metal ion. Suitably, when the metal ion is a Group IA metal ion, it is a lithium, sodium, potassium or cesium ion, more suitably a sodium or potassium ion, most suitably a potassium ion. Suitably, when the metal ion is a Group IIA metal ion, it is a magnesium, calcium or barium ion. Thus, suitable examples of the alkoxylation catalyst are lithium hydroxide, sodium hydroxide, potassium hydroxide, cesium hydroxide, magnesium hydroxide, calcium hydroxide and barium hydroxide, more suitably sodium hydroxide and potassium hydroxide, most suitably potassium hydroxide. Usually, the amount of such alkoxylation catalyst is of from 0.01 to 5 wt.%, more suitably 0.05 to 1 wt.%, most suitably 0.1 to 0.5 wt.%, based on the total weight of the catalyst, alcohol and alkylene oxide (i.e. the total weight of the final reaction mixture).

The alkoxylation procedure serves to introduce a desired average number of alkylene oxide units per mole of alcohol alkoxylate (that is alkoxylated alcohol), wherein different numbers of alkylene oxide units are distributed over the alcohol alkoxylate molecules. For example, treatment of an alcohol with 7 moles of alkylene oxide per mole of primary alcohol serves to effect the alkoxylation of each alcohol molecule with 7 alkylene oxide groups, although a substantial proportion of the alcohol will have become combined with more than 7 alkylene oxide groups and an approximately equal proportion will have become combined with less than 7. In a typical alkoxylation product mixture, there may also be a minor proportion of unreacted alcohol.

Non-alkoxylated alcohols R-OH, from which the hydrocarbyl group R in the above formula (I) for the additive originates, wherein R is a branched alkyl group which has a branching index equal to or greater than 0.3 and which has a weight average carbon number of from 5 to 32, are commercially available. A suitable example of a commercially available alcohol mixture is NEODOL^{TM} 67, which includes a mixture of C₁₆ and C₁₇ alcohols of the formula R-OH, wherein R is a branched alkyl group having a branching index of about 1.3, sold by Shell Chemical Company. NEODOL^{TM} as used throughout this text is a trademark. Another suitable example is EXXAL™ 13 tridecylalcohol (TDA), sold by ExxonMobil, which product is of the formula R-OH wherein R is a branched alkyl group having a branching index of about 2.9 and having a carbon number distribution wherein 30 wt.% is C₁₂, 65 wt.% is C₁₃ and 5 wt.% is C₁₄. Yet another suitable example is MARLIPAL® tridecylalcohol (TDA), sold by Sasol, which product is of the formula R-OH wherein R is a branched alkyl group having a branching index of about 2.2 and having 13 carbon atoms.

Further, in the above formula (I) for the additive, X may be a group comprising a carboxylate, sulfate or sulfonate moiety, which are anionic moieties.

In the above-mentioned embodiments of the invention, wherein the additive is of the above formula (I) and X in the above formula (I) is a group comprising an anionic moiety, the cation may be any cation, such as an ammonium, protonated amine, alkali metal or alkaline earth metal cation, preferably an ammonium, protonated amine or alkali metal cation, most preferably an ammonium or protonated amine cation. Examples of suitable protonated amines are protonated methylamine, protonated ethanolamine and protonated diethanolamine. Surfactants of the formula (I) wherein X is a group comprising an anionic moiety may be prepared from the above-described alkoxylated alcohols of the formula R-O-[PO]_{x[}EO]_{y}-H, as is further described hereinbelow.

In a case where X in the above formula (I) is a group comprising a carboxylate moiety, the additive is of the formula (II)

Formula (II) R-O-[PO]ₓ[EO]_{y}-L-C(=O)O⁻

wherein R, PO, EO, x and y have the above-described meanings and L is an alkyl group, suitably a C₁-C₄ alkyl group, which may be unsubstituted or substituted, and wherein the -C(=O)O⁻ moiety is the carboxylate moiety.

The alkoxylated alcohol R-O-[PO]ₓ[EO]_{y}-H may be carboxylated by any one of a number of well-known methods. It may be reacted, preferably after deprotonation with a base, with a halogenated carboxylic acid, for example chloroacetic acid, or a halogenated carboxylate, for example sodium chloroacetate. Alternatively, the alcoholic end group may be oxidized to yield a carboxylic acid, in which case the number x (number of alkylene oxide groups) is reduced by 1. Any carboxylic acid product may then be neutralized with an alkali metal base to form a carboxylate surfactant.

In a specific example, an alcohol may be reacted with potassium t-butoxide and initially heated at for example 60°C under reduced pressure for for example 10 hours. It would be allowed to cool and then sodium chloroacetate would be added to the mixture. The reaction temperature would be increased to for example 90°C under reduced pressure and heating at said temperature would take place for for example 20-21 hours. It would be cooled to room temperature and water and hydrochloric acid would be added. This would be heated at for example 90°C for for example 2 hours. The organic layer may be extracted by adding ethyl acetate and washing it with water.

In a case where X in the above formula (I) is a group comprising a sulfate moiety, the surfactant is of the formula (III)

Formula (III) R-O-[PO]ₓ[EO]_{y}-SO₃⁻

wherein R, PO, EO, x and y have the above-described meanings, and wherein the -O-SO₃⁻ moiety is the sulfate moiety.

The alcohol R-O-[PO]ₓ[EO]_{y}-H may be sulfated by any one of a number of well-known methods, for example by using one of a number of sulfating agents including sulfur trioxide, complexes of sulfur trioxide with (Lewis) bases, such as the sulfur trioxide pyridine complex and the sulfur trioxide trimethylamine complex, chlorosulfonic acid and sulfamic acid. The sulfation may be carried out at a temperature preferably not above 80°C. The sulfation may be carried out at temperature as low as -20°C. For example, the sulfation may be carried out at a temperature from 20 to 70°C, preferably from 20 to 60°C, and more preferably from 20 to 50°C.

Said alcohol may be reacted with a gas mixture which in addition to at least one inert gas contains from 1 to 8 vol.%, relative to the gas mixture, of gaseous sulfur trioxide, preferably from 1.5 to 5 vol.%. Although other inert gases are also suitable, air or nitrogen are preferred.

The reaction of said alcohol with the sulfur trioxide containing inert gas may be carried out in falling film reactors. Such reactors utilize a liquid film trickling in a thin layer on a cooled wall which is brought into contact in a continuous current with the gas. Kettle cascades, for example, would be suitable as possible reactors. Other reactors include stirred tank reactors, which may be employed if the sulfation is carried out using sulfamic acid or a complex of sulfur trioxide and a (Lewis) base, such as the sulfur trioxide pyridine complex or the sulfur trioxide trimethylamine complex.

Following sulfation, the liquid reaction mixture may be neutralized using an aqueous alkali metal hydroxide, such as sodium hydroxide or potassium hydroxide, an aqueous alkaline earth metal hydroxide, such as magnesium hydroxide or calcium hydroxide, or bases such as ammonium hydroxide, substituted ammonium hydroxide, sodium carbonate or potassium hydrogen carbonate. The neutralization procedure may be carried out over a wide range of temperatures and pressures. For example, the neutralization procedure may be carried out at a temperature from 0 °C to 65 °C and a pressure in the range from 100 to 200 kPa abs.

In a case where X in the above formula (I) is a group comprising a sulfonate moiety, the additive is of the formula (IV)

Formula (IV) R-O-[PO]ₓ[EO]_{y}-L-S(=O)₂O⁻

wherein R, PO, EO, x and y have the above-described meanings and L is an alkyl group, suitably a C₁-C₄ alkyl group, which may be unsubstituted or substituted, and wherein the -S(=O)₂O⁻ moiety is the sulfonate moiety.

The alkoxylated alcohol R-O-[PO]ₓ[EO]_{y}-H may be sulfonated by any one of a number of well-known methods. It may be reacted, preferably after deprotonation with a base, with a halogenated sulfonic acid, for example chloroethyl sulfonic acid, or a halogenated sulfonate, for example sodium chloroethyl sulfonate. Any resulting sulfonic acid product may then be neutralized with an alkali metal base to form a sulfonate surfactant.

Particularly suitable sulfonate surfactants are glycerol sulfonates. Glycerol sulfonates may be prepared by reacting the alkoxylated alcohol R-O-[PO]ₓ[EO]_{y}-H with epichlorohydrin, preferably in the presence of a catalyst such as tin tetrachloride, for example at from 110 to 120 °C and for from 3 to 5 hours at a pressure of 14.7 to 15.7 psia (100 to 110 kPa) in toluene. Next, the reaction product is reacted with a base such as sodium hydroxide or potassium hydroxide, for example at from 85 to 95 °C for from 2 to 4 hours at a pressure of 14.7 to 15.7 psia (100 to 110 kPa). The reaction mixture is cooled and separated in two layers. The organic layer is separated and the product isolated. It may then be reacted with sodium bisulfite and sodium sulfite, for example at from 140 to 160°C for from 3 to 5 hours at a pressure of 60 to 80 psia (400 to 550 kPa). The reaction is cooled and the product glycerol sulfonate is recovered. Such glycerol sulfonate has the formula R-O-[PO]ₓ[EO]_{y}-CH₂-CH(OH)-CH₂-S(=O)₂O⁻.

In addition to the above-described additive of formula (I), wherein the branched hydrocarbyl group R has a branching index equal to or greater than 0.3, the internal olefin sulfonate composition of the present invention may also comprise one or more non-ionic surfactants of the formula (V)

Formula (V) R-O-[PO]ₓ[EO]_{y}-H

wherein R is a hydrocarbyl group which has a branching index of from 0 to lower than 0.3 and which has a weight average carbon number of from 4 to 25, PO is a propylene oxide group, EO is an ethylene oxide group, x is the number of propylene oxide groups and is 0, y is the number of ethylene oxide groups and is at least 0.5.

The alcohol R-OH used to make the above-mentioned non-ionic surfactant of the formula (V) may be primary or secondary, preferably primary. The hydrocarbyl group R in said formula (V) is preferably aliphatic. When said hydrocarbyl group R is aliphatic, it may be an alkyl group, cycloalkyl group or alkenyl group, suitably an alkyl group. Preferably, said hydrocarbyl group is an alkyl group.

The weight average carbon number for the hydrocarbyl group R in said formula (V) is not essential and may vary within wide ranges, such as from 4 to 25, suitably 6 to 20, more suitably 8 to 15. Further, said hydrocarbyl group R in said formula (V) may be linear or branched and has a branching index of from 0 to lower than 0.3, suitably of from 0.1 to lower than 0.3.

In said formula (V), y is the number of ethylene oxide groups. In the present invention, for the non-ionic surfactant of said formula (V), the average value for y is at least 0.5. Said average value for y may be of from 1 to 20, more suitably 4 to 16, most suitably 7 to 13.

In the present invention, the weight ratio of the internal olefin sulfonate (IOS) to the above-mentioned, optional non-ionic surfactant of the formula (V) may vary within wide ranges and may be of from 1:100 to 20:100, suitably of from 2:100 to 15:100. Further, in the present invention, the weight ratio of the additive of the formula (I) to the above-mentioned, optional non-ionic surfactant of the formula (V) may also vary within wide ranges and may be of from 1:0.1 to 1:10, suitably of from 1:0.2 to 1:5, more suitably of from 1:0.3 to 1:2.

The above-mentioned, optional non-ionic surfactant of the formula (V) and/or the additive of the formula (I) as contained in the IOS composition of the present invention may be added during or after preparation of the internal olefin sulfonate. For example, they may be added as a process aid prior to or during either the neutralisation or hydrolysis stages of IOS manufacture, or they may be added after the hydrolysis stage.

Suitable examples of commercially available ethoxylated alcohol mixtures, which can be used as the above-mentioned non-ionic surfactants of the formula (V), include the NEODOL™ (NEODOL™, as used throughout this text, is a trademark) alkoxylated alcohols, sold by Shell Chemical Company, including mixtures of ethoxylates of C₉, C₁₀ and C₁₁ alcohols wherein the average value for the number of the ethylene oxide groups is 8 (NEODOL^{TM} 91-8 alcohol ethoxylate); mixtures of ethoxylates of C₁₄ and C₁₅ alcohols wherein the average value for the number of the ethylene oxide groups is 7 (NEODOL^{TM} 45-7 alcohol ethoxylate); and mixtures of ethoxylates of C₁₂, C₁₃, C₁₄ and C₁₅ alcohols wherein the average value for the number of the ethylene oxide groups is 12 (NEODOL™ 25-12 alcohol ethoxylate).

In the present invention, a cosolvent (or solubilizer) may be added to (further) increase the solubility of the surfactants in the internal olefin sulfonate composition of the present invention and/or in the below-mentioned injectable fluid comprising said composition. Suitable examples of cosolvents are polar cosolvents, including lower alcohols (for example sec-butanol and isopropyl alcohol) and polyethylene glycol. Any amount of cosolvent needed to dissolve all of the surfactant at a certain salt concentration (salinity) may be easily determined by a skilled person through routine tests.

Further, in accordance with the present invention, viscosity modifiers other than the above-described additive of formula (I) may be used in addition to said additive and be included in the internal olefin sulfonate composition of the present invention. Such other viscosity modifiers may be the co-solvent type compounds having a relatively low carbon number as described above under "Background of the invention". In particular, in addition to said additive, a linear or branched C₁ to C₆ monoalkylether of mono- or di-ethylene glycol may be used as a further viscosity modifier. Suitable examples are diethylene glycol monobutyl ether (DGBE), ethylene glycol monobutyl ether (EGBE) and triethylene glycol monobutyl ether (TGBE). Further, a linear or branched C₁ to C₆ dialkylether of mono-, di- or triethylene glycol, such as ethylene glycol dibutyl ether (EGDE), may be used as a further viscosity modifier.

Still further, the internal olefin sulfonate composition of the present invention may comprise a base (herein also referred to as "alkali"), preferably an aqueous soluble base, including alkali metal containing bases such as for example sodium carbonate and sodium hydroxide.

In yet another aspect, the present invention relates to a method of treating a hydrocarbon containing formation, comprising the following steps:
a) providing the composition which comprises an internal olefin sulfonate and an additive as described above to at least a portion of the hydrocarbon containing formation; and
b) allowing the surfactants from the composition to interact with the hydrocarbons in the hydrocarbon containing formation.

By "hydrocarbon containing formation" reference is made to a sub-surface hydrocarbon containing formation.

Where needed, it may be preferred that in step a) of the method of the present invention the composition is provided to the hydrocarbon containing formation while having a relatively high temperature, suitably higher than 20 °C, more suitably higher than 30 °C, most suitably higher than 40°C, for example of from 25 to 80 °C or of from 35 to 80 °C or of from 45 to 70°C. This may be needed in order to make the above-mentioned composition sufficiently fluid, for example in a case where the additive of the above formula (I) has a relatively high molecular weight, for example higher than 800 g/mole, or higher than 1,000 g/mole, or higher than 1,200 g/mole.

In the method of the present invention, the temperature may vary within wide ranges, for example of from 10 to 200 °C, suitably of from 20 to 150°C. By said temperature reference is made to the temperature in the hydrocarbon containing formation. In practice, said temperature may vary strongly between different hydrocarbon containing formations. In the present invention, said temperature may be at least 10 °C, suitably at least 20°C, more suitably at least 30°C, most suitably at least 40°C. Further, said temperature may be at most 200°C, suitably at most 180 °C, more suitably at most 160°C, most suitably at most 150°C. In a preferred embodiment, said temperature is 60°C or higher. Preferably, in said embodiment, said temperature is of from 60 to 200°C, more preferably of from 60 to 150°C.

Further, in the method of the present invention, the concentration of divalent cations may vary within wide ranges, for example of from 10 to 25,000 parts per million by weight (ppmw), suitably of from 50 to 20,000 ppmw. By said concentration of divalent cations reference is made to the concentration of divalent cations in the water or brine in combination with which the composition of the present invention which comprises an internal olefin sulfonate and an additive as described above, is provided to at least a portion of the hydrocarbon containing formation. Said water or brine may originate from the hydrocarbon containing formation or from any other source, such as river water, sea water or aquifer water. A suitable example is sea water which may contain 1,700 ppmw of divalent cations. Suitably, said divalent cations comprise calcium (Ca²⁺) and magnesium (Mg²⁺) cations. In practice, said concentration of divalent cations may vary strongly between different sources. In the present invention, said concentration of divalent cations may be at least 10 ppmw, suitably at least 50 ppmw, more suitably at least 100 ppmw, more suitably at least 500 ppmw, more suitably at least 1,000 ppmw, more suitably at least 2,000 ppmw, most suitably at least 3,000 ppmw. Further, said concentration of divalent cations may be at most 25,000 ppmw, suitably at most 20,000 ppmw, more suitably at most 15,000 ppmw, more suitably at most 10,000 ppmw, suitably at most 8,000 ppmw, more suitably at most 6,000 ppmw, most suitably at most 5,000 ppmw. In a preferred embodiment, said concentration of divalent cations is 100 or more ppmw. Preferably, in said embodiment, said concentration of divalent cations is of from 100 to 25,000 ppmw, more preferably of from 100 to 20,000 ppmw.

In a preferred embodiment, in the method of the present invention, the temperature is 60 °C or higher as described above and the concentration of divalent cations is 100 or more parts per million by weight (ppmw) as described above.

Further, in the present invention, the salinity of said water or brine, which may originate from the hydrocarbon containing formation or from any other source, may be of from 0.5 to 30 wt.% or 0.5 to 20 wt.% or 0.5 to 10 wt.% or 1 to 6 wt.%. By said "salinity" reference is made to the concentration of total dissolved solids (%TDS), wherein the dissolved solids comprise dissolved salts. Said salts may be salts comprising divalent cations, such as magnesium chloride and calcium chloride, and salts comprising monovalent cations, such as sodium chloride and potassium chloride. Sea water may have a salinity (%TDS) of 3.6 wt.%.

In the above-mentioned method of treating a hydrocarbon containing formation, the surfactants (an internal olefin sulfonate (IOS) and an additive) are applied in cEOR (chemical Enhanced Oil Recovery) at the location of the hydrocarbon containing formation, more in particular by providing the above-described IOS composition to at least a portion of the hydrocarbon containing formation and then allowing the surfactants from said composition to interact with the hydrocarbons in the hydrocarbon containing formation. Said hydrocarbon containing formation may be a crude oil-bearing formation.

Normally, surfactants for enhanced hydrocarbon recovery are transported to a hydrocarbon recovery location and stored at that location in the form of an aqueous composition containing for example 15 to 35 wt.% surfactant. At the hydrocarbon recovery location, the surfactant concentration of such composition would then be further reduced to 0.05-2 wt.%, by diluting the composition with water or brine, before it is injected into a hydrocarbon containing formation. Optionally, before such injection, the composition may be mixed with an alkali, such as sodium carbonate, and/or a water-soluble polymer. By such dilution with water or brine, an aqueous fluid is formed which fluid can be injected into the hydrocarbon containing formation, that is to say an injectable fluid. Advantageously, in the present invention, a more concentrated aqueous composition having an active matter content of for example 40 wt.% surfactant (including IOS), as described above, may be transported to said location and stored there, provided the above-described additive is added to such more concentrated aqueous composition, such that the weight ratio of the additive to the internal olefin sulfonate is below 1:1, in accordance with the present invention. A further advantage of the present invention is that the water or brine used in such further dilution, which water or brine may originate from the hydrocarbon containing formation (from which hydrocarbons are to be recovered) or from any other source, may have a relatively high concentration of divalent cations, suitably in the above-described ranges. One of the advantages of that is that such water or brine no longer has to be pre-treated (softened) such as to remove said divalent cations, thereby resulting in significant savings in time and costs. For offshore projects, not having to use a water softening unit is advantageous in that such equipment is bulky and may not be practicable given the space limitations of offshore projects.

The total amount of the surfactants in said injectable fluid may be of from 0.05 to 2 wt.%, preferably 0.1 to 1.5 wt.%, more preferably 0.1 to 1.0 wt.%, most preferably 0.2 to 0.5 wt.%.

Hydrocarbons may be produced from hydrocarbon containing formations through wells penetrating such formations. "Hydrocarbons" are generally defined as molecules formed primarily of carbon and hydrogen atoms such as oil and natural gas. Hydrocarbons may also include other elements, such as halogens, metallic elements, nitrogen, oxygen and/or sulfur. Hydrocarbons derived from a hydrocarbon containing formation may include kerogen, bitumen, pyrobitumen, asphaltenes, oils or combinations thereof. Hydrocarbons may be located within or adjacent to mineral matrices within the earth. Matrices may include sedimentary rock, sands, silicilytes, carbonates, diatomites and other porous media.

A "hydrocarbon containing formation" may include one or more hydrocarbon containing layers, one or more non-hydrocarbon containing layers, an overburden and/or an underburden. An overburden and/or an underburden includes one or more different types of impermeable materials. For example, overburden/underburden may include rock, shale, mudstone, or wet/tight carbonate (that is to say an impermeable carbonate without hydrocarbons). For example, an underburden may contain shale or mudstone. In some cases, the overburden/underburden may be somewhat permeable. For example, an underburden may be composed of a permeable mineral such as sandstone or limestone.

Properties of a hydrocarbon containing formation may affect how hydrocarbons flow through an underburden/overburden to one or more production wells. Properties include porosity, permeability, pore size distribution, surface area, salinity or temperature of formation. Overburden/underburden properties in combination with hydrocarbon properties, capillary pressure (static) characteristics and relative permeability (flow) characteristics may affect mobilisation of hydrocarbons through the hydrocarbon containing formation.

Fluids (for example gas, water, hydrocarbons or combinations thereof) of different densities may exist in a hydrocarbon containing formation. A mixture of fluids in the hydrocarbon containing formation may form layers between an underburden and an overburden according to fluid density. Gas may form a top layer, hydrocarbons may form a middle layer and water may form a bottom layer in the hydrocarbon containing formation. The fluids may be present in the hydrocarbon containing formation in various amounts. Interactions between the fluids in the formation may create interfaces or boundaries between the fluids. Interfaces or boundaries between the fluids and the formation may be created through interactions between the fluids and the formation. Typically, gases do not form boundaries with other fluids in a hydrocarbon containing formation. A first boundary may form between a water layer and underburden. A second boundary may form between a water layer and a hydrocarbon layer. A third boundary may form between hydrocarbons of different densities in a hydrocarbon containing formation.

Production of fluids may perturb the interaction between fluids and between fluids and the overburden/underburden. As fluids are removed from the hydrocarbon containing formation, the different fluid layers may mix and form mixed fluid layers. The mixed fluids may have different interactions at the fluid boundaries. Depending on the interactions at the boundaries of the mixed fluids, production of hydrocarbons may become difficult.

Quantification of energy required for interactions (for example mixing) between fluids within a formation at an interface may be difficult to measure. Quantification of energy levels at an interface between fluids may be determined by generally known techniques (for example spinning drop tensiometer). Interaction energy requirements at an interface may be referred to as interfacial tension. "Interfacial tension" as used herein, refers to a surface free energy that exists between two or more fluids that exhibit a boundary. A high interfacial tension value (for example greater than 10 dynes/cm) may indicate the inability of one fluid to mix with a second fluid to form a fluid emulsion. As used herein, an "emulsion" refers to a dispersion of one immiscible fluid into a second fluid by addition of a compound that reduces the interfacial tension between the fluids to achieve stability. The inability of the fluids to mix may be due to high surface interaction energy between the two fluids. Low interfacial tension values (for example less than 1 dyne/cm) may indicate less surface interaction between the two immiscible fluids. Less surface interaction energy between two immiscible fluids may result in the mixing of the two fluids to form an emulsion. Fluids with low interfacial tension values may be mobilised to a well bore due to reduced capillary forces and subsequently produced from a hydrocarbon containing formation. Thus, in surfactant cEOR, the mobilisation of residual oil is achieved through surfactants which generate a sufficiently low crude oil / water interfacial tension (IFT) to give a capillary number large enough to overcome capillary forces and allow the oil to flow.

Mobilisation of residual hydrocarbons retained in a hydrocarbon containing formation may be difficult due to viscosity of the hydrocarbons and capillary effects of fluids in pores of the hydrocarbon containing formation. As used herein "capillary forces" refers to attractive forces between fluids and at least a portion of the hydrocarbon containing formation. Capillary forces may be overcome by increasing the pressures within a hydrocarbon containing formation. Capillary forces may also be overcome by reducing the interfacial tension between fluids in a hydrocarbon containing formation. The ability to reduce the capillary forces in a hydrocarbon containing formation may depend on a number of factors, including the temperature of the hydrocarbon containing formation, the salinity of water in the hydrocarbon containing formation, and the composition of the hydrocarbons in the hydrocarbon containing formation.

As production rates decrease, additional methods may be employed to make a hydrocarbon containing formation more economically viable. Methods may include adding sources of water (for example brine, steam), gases, polymers or any combinations thereof to the hydrocarbon containing formation to increase mobilisation of hydrocarbons.

In the present invention, the hydrocarbon containing formation is thus treated with the diluted or not-diluted surfactants containing composition, as described above. Interaction of said composition with the hydrocarbons may reduce the interfacial tension of the hydrocarbons with one or more fluids in the hydrocarbon containing formation. The interfacial tension between the hydrocarbons and an overburden/underburden of a hydrocarbon containing formation may be reduced. Reduction of the interfacial tension may allow at least a portion of the hydrocarbons to mobilise through the hydrocarbon containing formation.

The ability of the surfactants containing composition to reduce the interfacial tension of a mixture of hydrocarbons and fluids may be evaluated using known techniques. The interfacial tension value for a mixture of hydrocarbons and water may be determined using a spinning drop tensiometer. An amount of the surfactants containing composition may be added to the hydrocarbon/water mixture and the interfacial tension value for the resulting fluid may be determined.

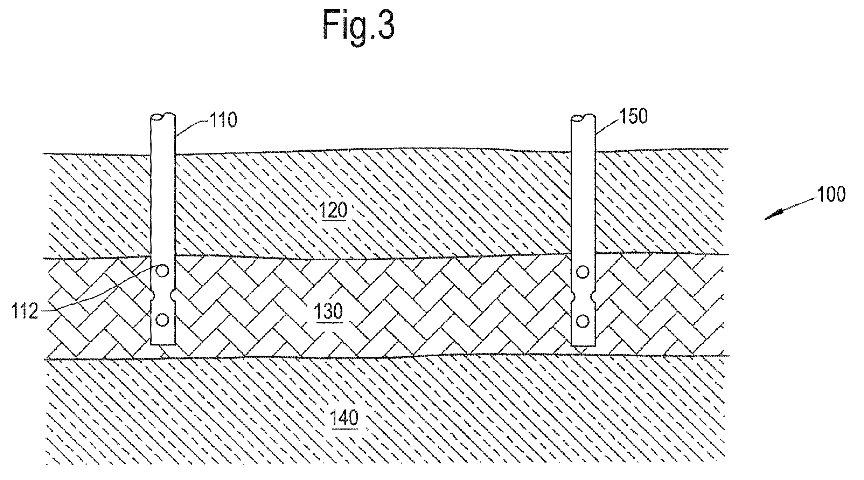

The surfactants containing composition, diluted or not diluted, may be provided (for example injected in the form of a diluted aqueous fluid) into hydrocarbon containing formation 100 through injection well 110 as depicted in Figure 3. Hydrocarbon containing formation 100 may include overburden 120, hydrocarbon layer 130 (the actual hydrocarbon containing formation), and underburden 140. Injection well 110 may include openings 112 (in a steel casing) that allow fluids to flow through hydrocarbon containing formation 100 at various depth levels. Low salinity water may be present in hydrocarbon containing formation 100.

The surfactants from the surfactants containing composition may interact with at least a portion of the hydrocarbons in hydrocarbon layer 130. This interaction may reduce at least a portion of the interfacial tension between one or more fluids (for example water, hydrocarbons) in the formation and the underburden 140, one or more fluids in the formation and the overburden 120 or combinations thereof.

The surfactants from the surfactants containing composition may interact with at least a portion of hydrocarbons and at least a portion of one or more other fluids in the formation to reduce at least a portion of the interfacial tension between the hydrocarbons and one or more fluids. Reduction of the interfacial tension may allow at least a portion of the hydrocarbons to form an emulsion with at least a portion of one or more fluids in the formation. The interfacial tension value between the hydrocarbons and one or more other fluids may be improved by the surfactants containing composition to a value of less than 0.1 dyne/cm or less than 0.05 dyne/cm or less than 0.001 dyne/cm.

At least a portion of the surfactants containing composition/hydrocarbon/fluids mixture may be mobilised to production well 150. Products obtained from the production well 150 may include components of the surfactants containing composition, methane, carbon dioxide, hydrogen sulfide, water, hydrocarbons, ammonia, asphaltenes or combinations thereof. Hydrocarbon production from hydrocarbon containing formation 100 may be increased by greater than 50% after the surfactants containing composition has been added to a hydrocarbon containing formation.

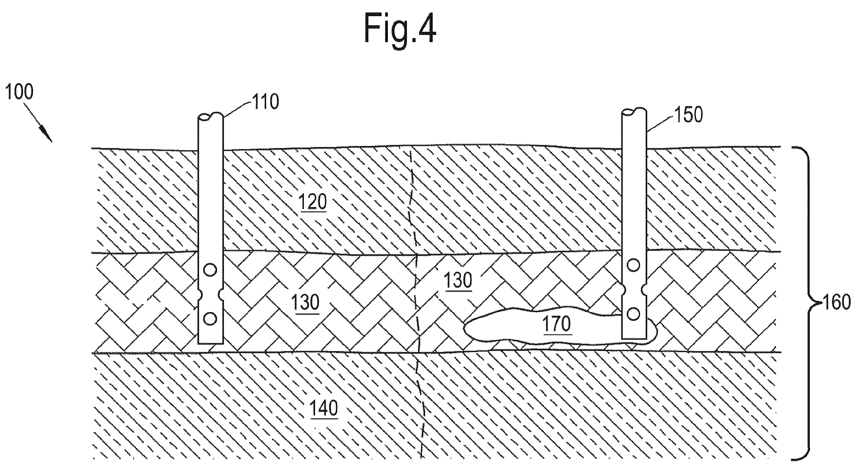

The surfactants containing composition, diluted or not diluted, may also be injected into hydrocarbon containing formation 100 through injection well 110 as depicted in Figure 4. Interaction of the surfactants from the surfactants containing composition with hydrocarbons in the formation may reduce at least a portion of the interfacial tension between the hydrocarbons and underburden 140. Reduction of at least a portion of the interfacial tension may mobilise at least a portion of hydrocarbons to a selected section 160 in hydrocarbon containing formation 100 to form hydrocarbon pool 170. At least a portion of the hydrocarbons may be produced from hydrocarbon pool 170 in the selected section of hydrocarbon containing formation 100.

It may be beneficial under certain circumstances that an aqueous fluid, wherein the surfactants containing composition is diluted, contains inorganic salt, such as sodium chloride, sodium hydroxide, potassium chloride, ammonium chloride, sodium sulfate or sodium carbonate. Such inorganic salt may be added separately from the surfactants containing composition or it may be included in the surfactants containing composition before it is diluted in water. The addition of the inorganic salt may help the fluid disperse throughout a hydrocarbon/water mixture and to reduce surfactant loss by adsorption onto rock. This enhanced dispersion may decrease the interactions between the hydrocarbon and water interface. The decreased interaction may lower the interfacial tension of the mixture and provide a fluid that is more mobile.

The invention is further illustrated by the following Examples.

### Examples

### 1. Chemicals used in the Examples

### 1.1 IOS surfactants A, B and C

Internal olefin sulfonate (IOS) surfactant A was an IOS surfactant which originated from a mixture of C15-18 internal olefins which was a mixture of odd and even carbon number olefins and had a weight average carbon number of 16.5. 1.0% of the total internal olefins were C14 internal olefins, 23.7% were C15, 27.2% were C16, 26.8% were C17, 18.7% were C18, and 2.7% were C19.

IOS surfactant B was an IOS surfactant which originated from a mixture of C20-24 internal olefins which was a mixture of only even carbon number olefins and had a weight average carbon number of 20.6. Less than 3% of the total internal olefins were C18 and lower internal olefins, 70% were C20, 22% were C22, 4% were C24 and less than 1% were C26 and higher.

IOS surfactant C was an IOS surfactant which originated from a mixture of C24-28 internal olefins which was a mixture of odd and even carbon number olefins and had a weight average carbon number of 27.0. Less than 14.9% of the total internal olefins were C23 and lower internal olefins, 7.6% were C24, 9.0% were C25, 10.2% were C26, 10.4% were C27, 9.8% were C28 and less than 38.1% were C29 and higher.

IOS surfactants A, B and C were sodium salts. Further properties for said surfactants are mentioned in Table 1 below.

**Table 1 - Properties of IOS A, B and C**

| IOS surfactant concentrate | A | B | C |
|---|---|---|---|
| *Properties of olefins used in IOS preparation* | | | |
| Weight average carbon number | 16.5 | 20.6 | 27.0 |
| Weight ratio branched: linear ⁽¹⁾ | 0.09:1 | 0.05:1 | 0.25:1 |
| *Composition of IOS* | | | |
| Hydroxyalkane sulfonates (%) | 81 | 77 | 43 |
| Alkene sulfonates (%) | 18 | 21 | 56 |
| Di-sulfonates (%) | 0.5 | 2 | 1 |
| *Components other than IOS* | | | |
| Free oil (wt.%) ⁽²⁾ | 3.1 | 8.1 | 16.9 |
| NEODOL™ 91-8 non-ionic surfactant (wt.%) ⁽²⁾ | 5.0 | 10.0 | 0 |
| NEODOL™ 25-12 non-ionic surfactant (wt.%) ⁽²⁾ | 0 | 0 | 5.0 |
| Na₂SO₄ (wt.%) ⁽²⁾ | 3.1 | 2.4 | 9.8 |

| | | | |
|---|---|---|---|
| (1) Determined by GC. (2) Relative to IOS. | | | |

NEODOL™ 91-8 as mentioned in Table 1 above is a mixture of ethoxylates of C₉, C₁₀ and C₁₁ alcohols wherein the average value for the number of the ethylene oxide groups is 8 and the branching index of the alkyl group of the alcohols is 0.2.

NEODOL™ 25-12 as mentioned in Table 1 above is a mixture of ethoxylates of C₁₂, C₁₃, C₁₄ and C₁₅ alcohols wherein the average value for the number of the ethylene oxide groups is 12 and the branching index of the alkyl group of the alcohols is 0.2.

The free oil content as mentioned in Table 1 above is the content of non-ionic (organic) molecules, excluding the above-mentioned non-ionic NEODOL™ 91-8 and NEODOL™ 25-12 surfactants.

### 1.2 Alkoxylated alcohol additives

To the IOS surfactant containing aqueous compositions (IOS concentrates) as described in Table 1 above, alkoxylated alcohol additives of the formula R-O-[PO]ₓ[EO]_{y}-X (formula (I)) were added.

The R-O moiety in the additives of the above formula originated from a blend of primary alcohols of formula R-OH, wherein R was an aliphatic group. The aliphatic group R was randomly branched and had a certain branching index, wherein the branches comprised methyl and ethyl branches. The alkylene oxide moiety in the additives of above formula originated from propylene oxide (PO) and/or ethylene oxide (EO). "x" in the above formula represents the average number of moles of propylene oxide groups per mole of alcohol. "y" in the above formula represents the average number of moles of ethylene oxide groups per mole of alcohol. The additives were either non-ionic (X = hydrogen atom) or anionic (sulfate (-O-SO₃⁻) end group: X = SO₃⁻ ; Na⁺ is the cation). Further properties are described in Tables 2, 3 and 4 below.

### 2. Viscosity measurements

The influence of adding alkoxylated alcohol additives in accordance with the present invention, as referred to in Section 1.2 above and as further described in Tables 2 and 3 below, to IOS surfactant containing aqueous compositions (IOS concentrates) as described in Section 1.1 and Table 1 above, on the rheological behaviour of said IOS concentrates was assessed in the following way.

An Anton-Paar MCR102 rheometer was used for determining the surfactant rheology. Measurements were performed using a rotational test, with the shear rate increasing from 0.1 to 1000 reciprocal seconds. The measuring point duration varied logarithmically from 10 seconds at the start of the run to 2 seconds at the end of the run. Data were collected at a rate of six points per 10 logarithmic units. A parallel plate (PP25, 24.962 mm diameter and 0.5 mm gap) measuring system was used. The sample temperature was maintained at 20, 40 or 60 °C using the built-in Peltier device in conjunction with an in-line with a Julabo F32 circulator. The circulator temperature was set at 25 °C. The sample temperature equilibration time was approximately 5 minutes before the start of the measurement run. A separate pre-shearing step was not performed. Averaged viscosity results at 10 s⁻¹ shear rate are reported in Tables 2 and 3 below.

In the viscosity tests of Table 2, an IOS surfactant C concentrate having an active matter content of 65 wt.% was used. In the viscosity tests of Table 3, a blend of IOS surfactant A and B concentrates having an active matter content of 65 wt.% was used, wherein the weight ratio of IOS surfactant A to IOS surfactant B was 3:1. "Active matter" herein means the total of anionic species in the IOS concentrate or blend of IOS concentrates, but excluding any inorganic anionic species like for example sodium sulfate. In each case, the amount of the alkoxylated alcohol additive was 10 wt.%, relative to the IOS (that is to say, relative to the active matter).

**Table 2 - IOS surfactant C viscosity tests**

| Addictive ⁽¹⁾ | B.I. ⁽²⁾ | 20 °C ⁽³⁾ | 40 °C ⁽³⁾ | 60 °C ⁽³⁾ |
|---|---|---|---|---|
| No additive (reference) | - | 185,000 | 82,900 | 30,000 |
| C12/C13-PO₇-H | 1.2 | 90,540 | 10,080 | 3, 630 |
| C12/C13-PO₁₂-EO₄-H | 1.2 | 119,850 | 20,240 | 4, 950 |
| C12/C13-PO₁₃-EO₁₀-H | 1.2 | 118,000 | 29,400 | 6, 380 |
| C12/C13-PO₁₃-EO₂₀-H | 1.2 | 95,900 | 26,400 | 7,100 |
| C12/C15-EO₁₂-H (comparison) ⁽⁴⁾ | 0.2 | 147,000 | 32,300 | 9, 300 |

| | | | | |
|---|---|---|---|---|
| (1) The additive is of formula R-O-[PO]_{x[}EO]_{y}-X (formula (I)), wherein for example: "C12/13" means that the weight average carbon number of the aliphatic group R was between 12 and 13; "PO7" means that the mole average number of propyleneoxy (PO) groups was 7; and "EO7" means that the mole average number of ethyleneoxy (EO) groups was 7. (2) "B.I." refers to the branching index of the aliphatic group R in formula R-O-[PO]_{x[}EO]_{y}-X (formula (I)). (3) The viscosity values at 10 s⁻¹ shear rate (and at the temperature stated) are provided in cP (= mPa·s). (4) This (comparative) additive C12/C15-EO₁₂-H is NEODOL™ 25-12, a certain amount of which was already contained in IOS concentrate C (see Table 1). Thus, the total amount of NEODOL™ 25-12 was 15 wt.% (5 wt.% in IOS concentrate C and 10 wt.% added to that concentrate for the viscosity tests). | | | | |

**Table 3 - IOS surfactants A+B viscosity tests**

| Addictive ⁽¹⁾ | B.I. ⁽²⁾ | 20 °C ⁽³⁾ | 40 °C ⁽³⁾ | 60 °C ⁽³⁾ |
|---|---|---|---|---|
| No additive (reference) | - | 42,200 | 37,900 | 29,500 |
| C12/C13-PO₇-H | 1.2 | 24,200 | 10,300 | 4, 940 |
| C12/C13-PO₁₂-EO₄-H | 1.2 | 40,600 | 19,300 | 11,400 |
| C12/C13-PO₁₃-EO₁₀-H | 1.2 | - | 30,700 | 15,700 |
| C12/C13-PO₇-SO₃⁻Na⁺ | 1.2 | - | - | 26,800 |

| | | | | |
|---|---|---|---|---|
| Reference is made to the notes under Table 2 above. | | | | |

As can be seen from Tables 2 and 3 above, the viscosity of the IOS concentrate C (Table 2) and the viscosity of the blend of IOS concentrates A and B (Table 3), respectively, were greatly reduced by adding the alkoxylated alcohol additives of the formula (I) in accordance with the present invention, as compared to the viscosity for the reference wherein no such additive was added.

Further, as can be seen from Table 2 above, the viscosity of the IOS concentrate C was also greatly reduced by adding the alkoxylated alcohol additives of the formula (I) having a branching index of 1.2 in accordance with the present invention (requiring the branching index to be equal to or greater than 0.3), as compared to the viscosity for a comparison wherein the added additive had a lower branching index of 0.2 (comparison).

### 3. Solubility tests

The aqueous solubility of various aqueous IOS compositions was evaluated via visual observation. The solubility was judged as completely precipitated, some phase separation, a turbid solution or a clear solution, as measure of increasing solubility.

The water used to test the aqueous solubility was water having a salinity (or TDS concentration, wherein "TDS" refers to "total dissolved solids" comprising dissolved salts) of 3.5 wt.% and having a weight ratio of sodium (Na):potassium (K):calcium (Ca):magnesium (Mg) of 10.1:0.4:0.4:1.2 which salinity and weight ratio are normally observed in sea water. Further, said water contained approximately 1700 ppmw of divalent cations. The pH was set sufficiently low with ammonia chloride such that Mg(OH)₂ precipitation was prevented.

In the solubility tests, a mixture of IOS surfactants A and B (IOS A and B) was used. IOS A and B are described in Section 1.1 and Table 1 above. However, in deviation from Table 1 above, the amount of the NEODOL^{TM} 91-8 non-ionic surfactant for IOS B was 5 wt.% (not 10 wt.%). Further, in all solubility tests, the weight ratio of IOS A to IOS B was 3:1, and the total concentration of IOS A and B was 0.4 wt.%. In each of said tests, an alkoxylated alcohol additive in accordance with the present invention, as referred to in Section 1.2 above and as further described in Table 4 below, was added. Some of these additives were also used in the viscosity tests decribed in Section 2 and Tables 2 and 3 above. The concentration of the additive was 0.2 wt.%, and therefore the weight ratio of the additive to the total amount of IOS A and B was 1:2. In Table 4 below, the aqueous solubility data are shown at 2 different temperatures.

**Table 4 - IOS surfactants A+B solubility tests**

| Addictive ⁽¹⁾ | B.I. ⁽²⁾ | 50 °C | 90 °C |
|---|---|---|---|
| No additive (reference) | - | Completely precipitated | Completely precipitated |
| C12/C13-PO₇-H | 1.2 | Phase separation | Phase separation |
| C12/C13-EO₇-H | 1.2 | Turbid | Phase separation |
| C12/C13-PO₁₂-EO₄-H | 1.2 | Turbid | Phase separation |
| C12/C13-PO₁₃-EO₁₀-H | 1.2 | Clear | Turbid |
| C12/ C13-PO₁₃-EO₂₀-H | 1.2 | Clear | Clear |
| C12/C13-PO₇-SO₃⁻Na⁺ | 1.2 | Clear | Clear |

| | | | |
|---|---|---|---|
| Reference is made to the notes under Table 2 above. | | | |

Table 4 above shows that by the addition to an IOS, of the alkoxylated alcohol additives of the formula (I) in accordance with the present invention, the aqueous solubility of that IOS is improved, as in none of the cases where such additive was added complete precipitation occurred whereas in the case where an additive was not added complete precipitation did occur. Therefore, such addition makes an IOS containing composition suitable for injection into a reservoir. For precipitated solutions would not be suitable as they would result in loss of surfactant during a flood and could also result in reservoir plugging.

### 4. Microemulsion phase behaviour

In order to determine microemulsion phase behaviour, aqueous compositions comprising IOS surfactants and an alkoxylated alcohol additive or no additive, as described in Section 3 and Table 4 above, and having different salinities were prepared. The salinity of water having the above-mentioned salinity of 3.5 wt.% (see Section 3 above) was varied, with however maintaining the weight ratio of Na:K:Ca:Mg of 10.1:0.4:0.4:1.2. This was done by preparing a concentrated brine and diluting that with deionised water to give test brines having a TDS concentration above, at and lower than 3.5 wt.%.

In tubes, the aqueous solutions were mixed with octane (model oil) in a volume ratio of 1:1 and the system was allowed to equilibrate for days or weeks at a temperature of 50 °C (resembling a reservoir temperature).

These microemulsion phase behaviour tests were carried out to test the potential to mobilize residual oil by means of lowering the interfacial tension (IFT) between the oil and water. Microemulsion phase behaviour was first described by Winsor in "Solvent properties of amphiphilic compounds", Butterworths, London, 1954. The following categories of emulsions were distinguished by Winsor: "type I" (oil-in-water emulsion), "type II" (water-in-oil emulsion) and "type III" (emulsions comprising a bicontinuous oil/water phase). A Winsor Type III emulsion is also known as an emulsion which comprises a so-called "middle phase" microemulsion. A microemulsion is characterised by having the lowest IFT between the oil and water for a given oil/water mixture.

For anionic surfactants, increasing the salinity (salt concentration) of an aqueous solution comprising the surfactant(s) causes a transition from a Winsor type I emulsion to a type III and then to a type II. The tubes containing octane (model oil) and water are mixed and allowed to equilibrate at the test temperature and the volumes of individual phases are measured in a "static phase volume method".

In the above-mentioned microemulsion phase behaviour tests, both for the IOS surfactant composition including the C12/c13-PO₁₃-EO₂₀-H additive in accordance with the present invention (see Table 4 above) and for the IOS surfactant composition not including any additive (reference in Table 4 above), Winsor Type III emulsions were observed at 50 °C.

Further, the above microemulsion phase behaviour tests were repeated with the exception that a crude oil was used instead of octane. The crude oil that was used was a crude oil as described in WO201330140 which crude oil is designated therein as "crude oil W", the oil properties and oil components of which are described at page 47, line 28 to page 49, line 4 of WO201330140. In these crude oil tests, Winsor Type III emulsions were also observed at 50 °C.

In summary, the above demonstrates that inclusion of an additive of the formula (I) in accordance with the present invention, surprisingly and advantageously, gives a reduction in the viscosity of the IOS surfactant concentrate (see Section 2 above), and at the same time is not detrimental for the diluted injected surfactant characteristics of aqueous solubility (see Section 3 above) and is neither detrimental for the microemulsion phase behaviour/low IFT which has been demonstrated both with octane as oil and with crude oil as oil (see this Section 4). Achieving such low IFT is desired when providing an aqueous IOS composition to a hydrocarbon containing formation in order to recover hydrocarbons therefrom.

## Claims

1. Internal olefin sulfonate composition, which comprises an internal olefin sulfonate and an additive, wherein the weight ratio of the additive to the internal olefin sulfonate is below 1:1, and wherein the additive is a compound of the formula (I)
Formula (I) R-O-[PO]ₓ[EO]_{y}-X
wherein R is a branched hydrocarbyl group which has a branching index equal to or greater than 0.3 and which has a weight average carbon number of from 5 to 32, PO is a propylene oxide group, EO is an ethylene oxide group, x is the number of propylene oxide groups and is of from 0 to 40, y is the number of ethylene oxide groups and is of from 0 to 50, and the sum of x and y is of from 5 to 60;
and wherein X is selected from the group consisting of:
(i) a hydrogen atom; (ii) a group comprising a carboxylate moiety; (iii) a group comprising a sulfate moiety; and (iv) a group comprising a sulfonate moiety.

2. Composition according to claim 2, wherein X in the formula (I) is a hydrogen atom.

3. Composition according to claim 1 or 2, wherein the internal olefin sulfonate is selected from the group consisting of C₁₅₋₁₈ IOS, C₁₉₋₂₃ IOS, C₂₀₋₂₄ IOS, C₂₄₋₂₈ IOS and mixtures thereof.

4. A method of treating a hydrocarbon containing formation, comprising the following steps:
a) providing the composition which comprises an internal olefin sulfonate and an additive according to any one of claims 1-3 to at least a portion of the hydrocarbon containing formation; and
b) allowing the surfactants from the composition to interact with the hydrocarbons in the hydrocarbon containing formation.
